(19) **Europäisches Patentamt**

**European Patent Office**

**Office européen des brevets**

(11) **EP 0 926 510 B1**

(12) **FASCICULE DE BREVET EUROPEEN**

(45) Date de publication et mention
de la délivrance du brevet:
**31.08.2005 Bulletin 2005/35**

(51) Int Cl.$^7$: **G01S 11/02**, G01S 5/12,
H04Q 7/38

(21) Numéro de dépôt: **98403224.3**

(22) Date de dépôt: **18.12.1998**

(54) **Procedé de localisation spatio-temporelle, de radio-mobiles en milieu urbain**

Verfahren zur Positionsbestimmung von mobilen Objekten im Stadtverkehr

Method of position determination of mobiles in an urban environment

(84) Etats contractants désignés:
**DE FI FR GB IT NL SE**

(30) Priorité: **23.12.1997 FR 9716341**

(43) Date de publication de la demande:
**30.06.1999 Bulletin 1999/26**

(73) Titulaire: **Thales**
**75008 Paris (FR)**

(72) Inventeurs:
• **Chenu-Tournier, Marc**
**94117 Arcueil Cedex (FR)**
• **Ferreol, Anne**
**94117 Arcueil Cedex (FR)**
• **Monot, Jean-Jacques**
**94117 Arcueil Cedex (FR)**

(56) Documents cités:
**EP-A- 0 701 334        WO-A-97/23785**
**WO-A-97/46034**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de localisation de radio-mobiles en milieu urbain.

Elle s'applique notamment à la localisation et au suivi de radio-mobiles dans un réseau GSM pour anticiper leur passage d'une cellule à la suivante et améliorer la réception des stations de base par la connaissance de la position des radio-mobiles émetteurs.

Dans des configurations simples de propagation, la localisation de radio-mobiles est traditionnellement obtenue à l'aide de radio-goniomètres disposés en des lieux déterminés d'un territoire. La position d'un radio-mobile peut alors être déterminée par triangulation en reportant sur une carte géographique les lieux où sont situés les radiogoniomètres ainsi que les directions d'arrivée sur ceux ci des ondes radioélectriques émises par le radio-mobile.

Cependant, cette méthode qui repose sur l'exploitation des seuls chemins de propagation directs apparaît difficilement applicable dans le cas où les ondes empruntent plusieurs trajets et est également lourde de mise en oeuvre car elle nécessite plusieurs stations de réception. Ce type de propagation est notamment celui qui est rencontré en milieu urbain dans les réseaux de communication radio-mobiles cellulaires, où le spectre des communications est situé dans une gamme d'ultra hautes fréquences s'étendant typiquement de 30 MHz à 3 GHz pour le réseau GSM. Pour cette gamme de fréquences la propagation des ondes radioélectriques entre un émetteur et un récepteur peut empreinter des trajets multiples dus aux réflexions et aux diffractions sur des obstacles interposés sur le chemin de propagation direct entre l'émetteur et le récepteur. La gamme des fréquences utilisées est aussi la cause de trajets diffus, aussi bien temporellement que spatialement, qui dégradent les performances des liaisons.

La demande de brevet WO 97/23785 décrit un système permettant de localiser un émetteur radiofréquence. Le système comprend un réseau ayant au moins deux stations de base, un récepteur de référence localisé à une distance comme des stations de base, comprenant des moyens pour mesurer les temps d'arrivée des signaux transmis par les stations de base, un dispositif adapté à obtenir les décalages de temps relatifs à partir des mesures de distance et des temps mesurés, et un dispositif de localisation d'un émetteur mobile dans le réseau à partir de techniques de positionnement hyperboliques utilisant les décalages temporels.

Le but de l'invention est de pallier les inconvénients précités.

A cet effet, l'invention a pour objet un procédé de localisation spatio-temporelle d'un radio-mobile relativement à une station de base émettrice/réceptrice caractérisé en ce qu'il consiste :

-     à calculer la réponse impulsionnelle du canal de propagation entre le radio-mobile et la station émettrice/réceptrice,
-     à estimer à partir de la réponse impulsionnelle les couples d'angle et de retard du trajet de propagation direct et des multitrajets résultats de réflexions sur des obstacles situés dans le champ de propagation des ondes entre la station de base et le radio-mobile,
-     à calculer l'atténuation $\alpha_i$ de l'onde propagée par chaque trajet,
-     à calculer la distance d séparant la station émettrice/réceptrice du radio-mobile en considérant seulement les retards et les atténuations du trajet direct et d'un trajet non direct quelconque, la distance d étant déterminée par la relation

$$d = \frac{(\tau_2 - \tau_1)c}{\sqrt{\dfrac{\alpha_1}{\alpha_2}\dfrac{1}{\mu} - 1}}$$

où $\tau_2 - \tau_1$ est l'écart de temps de propagation entre le trajet direct et le trajet réfléchi, c'est la célérité des ondes transmises sur le canal de propagation, $\dfrac{\alpha_1}{\alpha_2}$ est le rapport des atténuations des propagations sur le trajet direct et le second trajet, et $\mu$ la partie due à la réflexion de l'onde sur le second trajet.

D'autres caractéristiques et avantages de l'invention apparaîtront à l'aide de la description qui suit faite en regard des dessins annexés qui représentent :

-     la figure 1 le procédé selon l'invention sous la forme d'un organigramme,
-     la figure 2, un modèle de réception monocapteur,
-     la figure 3, une illustration d'une réception multicapteur par une antenne circulaire,
-     les figures 4 et 5, une illustration d'une transmission à deux ou trois trajets en milieu urbain.

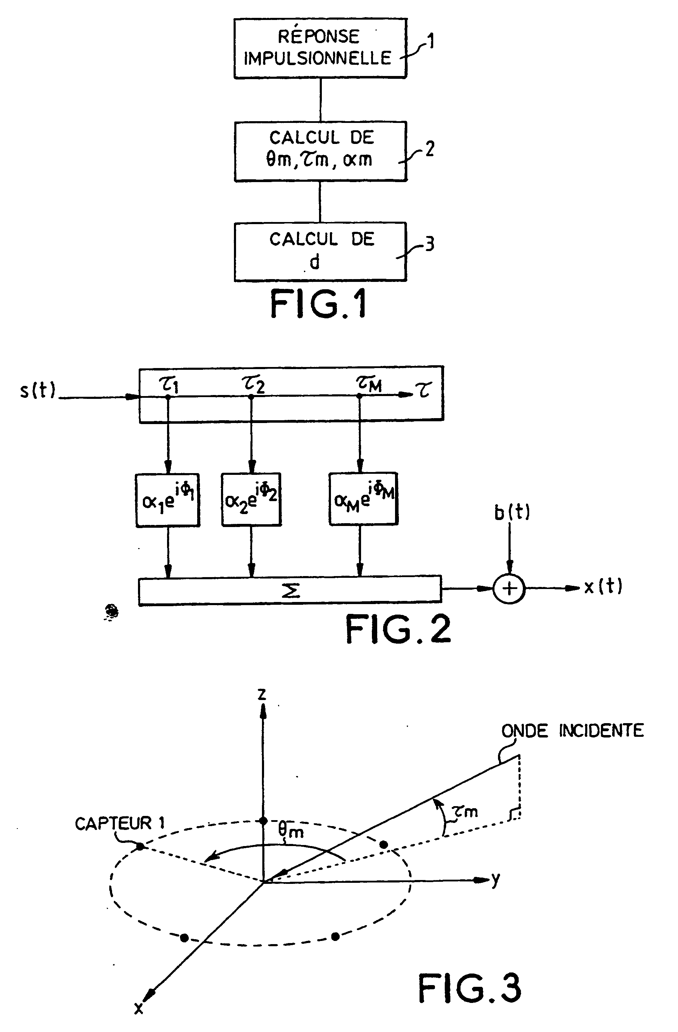

Le procédé selon l'invention se déroule de la façon représentée à la figure **1** suivant trois étapes principales. Dans une première étape, représentée en 1 à la figure 1, il consiste à calculer la réponse impulsionnelle h(t) du canal de propagation pour estimer à l'étape 2 les angles $\theta_m$ et les retards $\tau_m$ des différents trajets ainsi que les atténuations

$\alpha_n$ des ondes propagées sur chacun des trajets et enfin à calculer à l'étape 3, à partir des retards $\tau_m$ calculés et de la réponse impulsionnelle h(t) du canal, la distance d séparant un radio-mobile de la station d'émission/réception.

Le calcul de la réponse impulsionnelle du canal qui est effectué à l'étape 1 a lieu sur le signal obtenu à la sortie d'une antenne multi-capteurs. En présence de plusieurs trajets M d'émission bande étroite de radio-mobiles, le signal obtenu à la sortie d'un capteur n de l'antenne multi-capteurs est égal à la somme des M signaux $s_m(t)$ émis dans les directions $\theta_m$ retardés de $\tau_m$ et multipliés par la réponse $a_i(\theta_m)$ du capteur i dans les directions $\theta_m$ à laquelle s'ajoute un bruit $b_i(t)$. Dans l'hypothèse d'une transmission numérique à bande étroite de fréquence, une représentation de la sortie vectorielle de l'antenne composée de N capteurs s'obtient en concaténant la sortie $x_i(t)$ de chaque capteur, chaque sortie $x_i(t)$ vérifiant la relation :

$$x_i(t) = \sum_{m=1}^{M} s_m(t) . a_i(\theta_m) + b_i(t) \qquad (1)$$

En introduisant un vecteur directionnel $\underline{a}(\theta_m)$ tel que

$$\underline{a}(\theta_m) = [a_1(\theta_m), ..., a_N(\theta_m)]^t \qquad (2)$$

et en concaténant la sortie $x_i(t)$ de chaque capteur, on obtient un vecteur $\underline{x}(t)$ tel que :

$$\underline{x}(t) = \left[ x_1(t), x_i(t), x_N(t) \right]^t = \sum_{m=1}^{M} \underline{a}(\theta_m) s_m(t) + \underline{b}(t) \qquad (3)$$

En rassemblant les vecteurs directionnels $\underline{a}(\theta_m)$ dans une matrice $\mathbf{A} = [\underline{a}(\theta_1), \underline{a}(\theta_2),...,\underline{a}(\theta_N)]$ la relation précédente s'écrit encore :

$$\underline{x}(t) = A\underline{s}(t) + \underline{b}(t) \qquad (4)$$

avec $\underline{s}(t)=[s_1(t),s_2(t)\cdots s_M(t)]^t$,
où s, est le signal du 1$^{er}$ trajet,
$s_2$ est le signal du 2$^{ième}$ trajet,
...
$s_M$ est le signal du M$^{ième}$ trajet.

Suivant le modèle de propagation qui est représenté schématiquement à la figure 2, le signal x(t) qui est obtenu à la sortie d'un capteur de réception est un signal de la forme :

$$x(t) = \sum_{m=1}^{M} \alpha_m . e^{i\phi_m} . a(\theta_m) . s(t - \tau_m) + b(t) \qquad (5)$$

où $\alpha_m$ désigne l'atténuation du m$^{ième}$ trajet
$\tau_m$ est le retard de groupe du m$^{ième}$ trajet
M est le nombre de trajets
et $\phi_m$ est le déphasage du m$^{ième}$ trajet.
soit encore sous la forme d'une convolution du signal émis s(t) avec la réponse impulsionnelle h(t) du canal : soit

$$X_n(t)=h_n(t)*s(t)+b_n(t) \qquad (6)$$

où $b_n(t)$ représente l'enveloppe complexe du bruit additif.

Dans le cas d'une réception sur l'antenne composée de multi-capteurs, comme cela est représenté à la figure 3, la réponse impulsionnelle du canal est modifiée par la réponse de l'antenne suivant les directions d'arrivée. Cette réponse est de la forme :

$$h_n(t) = \sum_{m=1}^{M} a_n(\theta_m, \gamma_m) \alpha_m \, e^{i\phi_m} \delta(t - \tau_m) \qquad (7)$$

en supposant le canal idéal, c'est-à-dire de bande infinie.

En mode échantillonné, la réponse du canal de bande B prend la forme :

$$h_n[k] = F_e \sum_{m=1}^{M} a_n(\theta_m) \alpha_m \, e^{i\phi_m} \mathrm{sinc}\big((k - F_e \tau_m) B\big) \qquad (8)$$

avec $k \in Z$, l'espace des nombres entiers. et

$$\sin c((k - F_e \tau_m)B) = \frac{\sin(\pi(k - F_e \tau_m)B)}{\pi(k - F_e \tau_m)B} \qquad (9)$$

$F_e$ est la fréquence d'échantillonnage
B est la bande en fréquence réduite du signal.

Cette réponse peut être estimée par un filtre causal, à réponse impulsionnelle finie de longueur L et de coefficients tels que :

$$h_n[k] = \sum_{m=1}^{M} a_n(\theta_m) \alpha_m \, e^{i\phi_m} \mathrm{sinc}\big((k - F_e \tau_m) B\big) \qquad (10)$$

pour $k \in \{0 \dots L\}$
et $h_n[k] = 0$ pour $k \langle 0$ ou $k \rangle L$ Le vecteur $\underline{h}_n$ correspondant s'écrit

$$\underline{h}_n = [h_n(0), \cdots, h_n(L)]^t \qquad (11)$$

Suivant un premier mode de réalisation de l'invention, l'estimation des angles $\theta_m$ et des retards $\tau_m$ de l'étape 2, est exécutée de façon disjointe, en utilisant la relation matricielle suivante :

$$H = [\underline{h}_1, \underline{h}_2, \dots, \underline{h}_N] = M.\Omega.A^t \qquad (12)$$

avec:

$$M = \begin{bmatrix} \mathrm{sinc}(-\tau_1 F_e B) & \mathrm{sinc}(-\tau_2 F_e B) & \dots & \mathrm{sinc}(-\tau_M F_e B) \\ \mathrm{sinc}((1 - \tau_1 F_e)B) & \mathrm{sinc}((1 - \tau_2 F_e)B) & \dots & \mathrm{sinc}((1 - \tau_M F_e)B) \\ \dots & \dots & \dots & \dots \\ \mathrm{sinc}((L - \tau_1 F_e)B) & \mathrm{sinc}((L - \tau_2 F_e)B) & & \mathrm{sinc}((L - \tau_M F_e)B) \end{bmatrix} \qquad (13)$$

$$\Omega = \begin{bmatrix} \alpha_1 & 0 & \cdots & 0 \\ 0 & \alpha_2 & \ddots & \vdots \\ \vdots & \ddots & \ddots & 0 \\ 0 & \cdots & 0 & \alpha_N \end{bmatrix} \qquad (14)$$

$$A = [\underline{a}_1(\theta_1)...\underline{a}_N(\theta_N)] \qquad (15)$$

L'estimation des paramètres temporels $\tau_m$ s'obtient à partir de la relation (12) en estimant un projecteur $\mathbf{P}_{HH\dagger}$ sur l'espace temporel $\mathbf{HH}^\dagger$ et en appliquant soit la méthode connue sous l'abréviation anglo-saxonne MUSIC, de « Multi Signal Classification » en cherchant les maxima de la quantité

$$P_\tau = \frac{1}{\underline{m}(\tau)^\dagger P_{HH^\dagger} \underline{m}(\tau)} \qquad (16)$$

où $\underline{m}(\tau) = [\mathrm{sinc}(-\tau F_e B),..., \sin c((L - \tau F_e)B)]^t$ est une colonne de la matrice $\mathbf{M}$(13), soit la méthode déterministe connue sous le nom de « maximum de vraisemblance » en utilisant un critère de la forme

$$J\left(\tau_1, ..., \tau_M\right) = t_r\left(\left(I_{L+1} - M\,(M^\dagger M)^{-1} M^\dagger\right) HH^\dagger\right) \qquad (17)$$

Une description de la méthode MUSIC peut être trouvée dans l'article de M. Ralph O. Schmitt ayant pour titre « Multiple source DF signal processing : An experimental system » publiée dans IEEE transaction on antennas and propagation AP34 N° 3 March 1986.

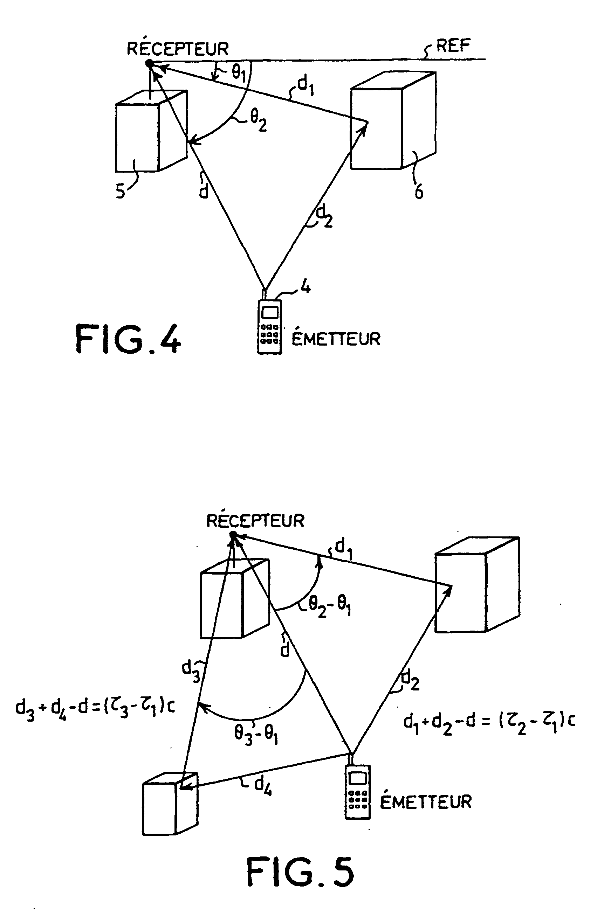

La détermination des M couples $(\theta_m, \tau_m)$ permet de localiser les radio-mobiles. Dans le cas où, comme cela est représenté à la figure 4, seulement deux trajets, un trajet direct et un trajet comportant une réflexion sont sélectionnés, la détermination des couples a lieu en considérant quatre paramètres $\theta_1, \tau_1, \theta_2, \tau_2$ qui se ramènent à la connaissance de $\theta_1, \theta_2$ et des retards $\tau_1, \tau_2$. En appelant d la distance du trajet direct qui sépare l'émetteur radio-mobile 4 d'un récepteur 5 et $d_1, d_2$ les distances du trajet indirect séparant respectivement le récepteur 5 d'un obstacle 6 sur lequel l'onde indirecte est réfléchie et l'émetteur 4 de l'obstacle 6, la distance d est fournie par la relation :

$$d = \frac{(\tau_2 - \tau_1)c}{\sqrt{\dfrac{\alpha_1}{\alpha_2}\dfrac{1}{\mu} - 1}} \qquad (18)$$

où $\alpha_1$ et $\alpha_2$ désignent les atténuations du premier et du deuxième trajet et $\mu$ la perte due à la réflexion du second trajet. Les atténuations $\alpha_1$ et $\alpha_2$ sont obtenues à partir des couples $(\theta_1, \tau_1; \theta_2, \tau_2)$ et de la relation matricielle

$$\hat{\Omega} = \hat{M}^{\#} H\, \hat{A}^{\#t} = \begin{bmatrix} \alpha_1 & 0 \\ 0 & \alpha_2 \end{bmatrix} \qquad (19)$$

où $\alpha_i$ correspond à l'atténuation du $i^{\text{ème}}$ trajet.

Comme la perte de puissance dans une propagation libre se fait en $\dfrac{1}{r^2}$ où r est la distance parcourue, $\alpha_1$ et $\alpha_2$ sont liés par la relation :

$$\frac{\alpha_1}{\alpha_2} = \frac{(d_1 + d_2)^2}{d^2}\, \mu \qquad (20)$$

avec

$$d_1 = \frac{(\tau_2 - \tau_1)^2 . c^2 + 2d(\tau_2 - \tau_1)c}{2[(\tau_2 - \tau_1)c + d - d\cos(\theta_2 - \theta_1)]} \qquad (21)$$

et

$$d_2 = \sqrt{d^2 + d_1^2 - 2dd_1\cos(\theta_2 - \theta_1)} \qquad (22)$$

S'il y a plus de deux trajets, la figure 5 montre que l'information apportée par tout trajet supplémentaire se résume à deux paramètres, et les nouvelles inconnues sont également au nombre de deux. En conséquence, une détection de plus de deux trajets n'a pas d'intérêt dans le sens où elle ne supprime pas les inconnues. Il suffit dans ces conditions de limiter les traitements en considérant seulement le trajet direct et un trajet autre quelconque. Connaissant les angles d'arrivée des différents trajets, il est possible, grâce à une carte topographique détaillée en trois dimensions de trouver les points de réflexion les plus probables et ainsi de remonter à la source d'émission.

D'autres modes d'estimation des paramètres sont également possibles.

L'estimation disjointe des paramètres décrite précédemment a l'avantage de réduire l'espace de recherche. Cependant, dans cette méthode , les angles et les retards ne sont pas associés si bien qu'elle souffre d'un manque de résolution pour estimer les retards proches.

D'autres modes de mise en oeuvre de l'invention permettent d'associer les paramètres en estimant la matrice des atténuations $\Omega$ avec les différentes combinaisons $(\theta_m, \tau_m)$ possibles en cherchant les couples rendant la matrice $\Omega$ la plus diagonale possible.

Selon un deuxième mode de mise en oeuvre de l'invention, le procédé opère par estimations successives en estimant successivement les angles $\theta$ et les retards $\tau$ tout en les associant. Pour cela, deux méthodes peuvent être utilisées. La première consiste à estimer les paramètres temporels $\tau_m$ connaissant les angles $\theta_m$.

En estimant des angles $\theta_m$ par la méthode MUSIC ou la méthode du maximum de vraisemblance l'estimation des retards $\tau_m$ est obtenue en estimant la matrice M par la relation matricielle

$$\hat{M} = H\hat{A} * \left(\hat{A}^t \hat{A}\right)^{-1} \qquad (23)$$

Chaque colonne de la matrice $\hat{M}$ forme un projecteur permettant de trouver le retard correspondant $\tau_m$ en appliquant l'algorithme MUSIC pour une seule source d'émission.

Le critère utilisé est de la forme :

$$P(\tau) = \frac{\underline{m}(\tau)^\dagger \underline{P}_{\hat{\tau}_i} \underline{m}(\tau)}{\underline{m}^\dagger(\tau)\underline{m}(\tau)} \qquad (26)$$

où

$$P_{\hat{\tau}_i} = \frac{\underline{m}(\hat{\tau}_i)\underline{m}^\dagger(\hat{\tau}_i)}{\underline{m}^\dagger(\hat{\tau}_i)\underline{m}(\hat{\tau}_i)}$$

avec $\underline{m}(\hat{\tau})$ tel que

$$\hat{M} = \left[\underline{m}(\hat{\tau}_i) \ldots \underline{m}(\hat{\tau}_M)\right]$$

et

$$\underline{m}(\tau) = \begin{bmatrix} \sin c\,(-\tau\,F_e\,B) \\ \vdots \\ \sin c\,((L-\tau\,F_e)\,B) \end{bmatrix}$$

L'estimation des retards peut également être obtenue par corrélation. En considérant que le signal reçu sur un capteur de M sources est de la forme :

$$\underline{x}(t) = \sum_{m=1}^{M} \underline{a}(\theta_m)\,s_m(t) + \underline{b}(t) \qquad (25)$$

et connaissant les angles $\theta_m$, il est possible de considérer un signal :

$$\underline{\hat{s}}[k] = A^{\#}\underline{x}[k]$$

qui est formé de M versions du signal émis retardées tel que :

$$\hat{s}[k] = \begin{bmatrix} \hat{s}\left(k - \tau_1\,F_e\right) \\ \hat{s}\left(k - \tau_2\,F_e\right) \\ \vdots \\ \hat{s}\left(k - \tau_M\,F_e\right) \end{bmatrix} \qquad (26)$$

L'autocorrélation d'une des composantes de $\hat{s}[k]$ permet d'obtenir une référence temporelle et l'intercorrélation de cette composante avec les autres composantes donne une estimation des retards relatifs.

De façon similaire à la méthode précédente, il est aussi possible d'estimer les paramètres spatiaux $\theta_m$ connaissant les retards $\tau_m$. Ceux-ci sont obtenus en calculant l'équation matricielle :

$$\hat{A}^t = (M^\dagger M)^{-1} M^\dagger H \qquad (27)$$

Chacune des méthodes utilisées dans ce deuxième mode de réalisation du procédé selon l'invention permet après avoir estimé les angles ou les retards de trouver les autres inconnues par M recherches en une dimension. Elles ont pour avantage de repousser certaines ambiguïtés, mais la seconde recherche apparaît très dépendante de la qualité de la première estimation. Une alternative serait d'effectuer, comme cela a été décrit par M. J. GROUFFAUD dans son mémoire de thèse de Doctorat de l'Ecole Normale Supérieure de Cachan de juin 1997 intitulée « Identification spatio-temporelle de canaux de propagation à trajets multiples », des recherches successives en alternant les méthodes pour affiner la précision de l'estimation des paramètres.

Enfin, suivant un troisième mode de réalisation du procédé selon l'invention, l'estimation des paramètres $\theta_m$ et $\tau_m$ a lieu de façon conjointe en appliquant des méthodes de détermination des réponses impulsionnelles fondées sur une décomposition en sous-espaces, un sous-espace signal de dimension M égale le nombre de sources et un sous-espace bruit, complémentaire du sous-espace signal de dimension N(L+1)-M, ou en appliquant la méthode du maximum de vraisemblance.

Pour estimer conjointement les angles et les retards par la méthode des sous-espaces, un projecteur $\mathbf{P}_{Rh}$ est créé à partir de la matrice d'autocorrélation des filtres $\mathbf{R_h} = E\,[\underline{h}\underline{h}^\dagger]$.

L'estimation $\underline{\hat{h}}$ du vecteur $\underline{h} = [h_1[O], h_1[1], ..., h_1[L], ..., h_N[0], h_N[1], ..., h_N[L]]^t$ a lieu en recherchant les maxima de la quantité

$$P_{(h)} = \frac{1}{\underline{g}^{\dagger}(\theta, \tau).P_{Rh}.\underline{g}(\theta, \tau)} \qquad (28)$$

où $\underline{g}(\theta,\tau)=\underline{a}(\theta)\otimes\underline{m}(\tau)$ et

$$\hat{\underline{h}} = \sum_{m=1}^{M} q_m \cdot \underline{g}(\theta_m, \tau_m)$$

avec $q_m = \alpha_m e^{i\phi_m}$

Dans la recherche des paramètres par la méthode du maximum de vraisemblance les paramètres cherchés sont les minimum du critère,

$$J(\theta_1, \tau_1, ..., \theta_m, \tau_m) = tr\left(I_{N(L+1)} - G(G^{\dagger}G)^{-1}G^{\dagger}R_h\right)$$

où

$$G = [\underline{g}(\theta_1, \tau_1)\cdots\underline{g}(\theta_m, \tau_m)]$$

Cette recherche a lieu dans l'espace de dimension $M \times 2$ des paramètres $(\theta_1, \tau_1, \cdots, \theta_M, \tau_M)$.

L'optimisation des différents modes de réalisation du procédé selon l'invention peut avoir lieu en appliquant une méthode connue d'optimisation du type Gauss-Newton. Après avoir trouvé un point d'initialisation par les méthodes décrites précédentes, une optimisation des angles $\theta_m$ peut avoir lieu en déroulant l'algorithme suivant :

Initialisation : $\theta_0 = \theta_{init}$

Itération k :

Calcul du gradient $\nabla_{k-1}$ et du hessien $H_{k-1}$ au point $\hat{\theta}_{k-1}$

Déterminer

$$\hat{\theta}_k = \hat{\theta}_{k-1} - H_{k-1}^{-1} \nabla_{k-1}$$

Test de la convergence

si $\|\nabla_{k-1}\| \langle \varepsilon$ STOP sinon $k = k + 1$

Le même type d'optimisation peut être utilisé pour optimiser la recherche des retards $\tau_m$.

Un autre mode d'optimisation peut être mis en oeuvre par une version approchée du maximum de vraisemblable suivant par exemple la méthode décrite dans IEEE transaction on signal processing, Vol. 39, N11, Novembre 1991 des auteurs M. Viberg, B. Ottersten, T. Kailath ayant pour titre : « Detection and estimation in sensor arrays using weighted subspace fitting ».

**ANNEXE A**

**GLOSSAIRE**

**A.1. Conventions standards:**

x* : conjuguée de x
$\underline{x}^t$ : transposée du vecteur $\underline{x}$
$\underline{x}^\dagger$ : transposée conjuguée du vecteur $\underline{x}$
$\mathbf{X}^t$ : transposée de la matrice $\mathbf{X}$
$\mathbf{X}^\dagger$ : transposée conjuguée de la matrice $\mathbf{X}$
$\mathbf{X}^{-1}$ : inverse de $\mathbf{X}$
$\mathbf{X}^\#$ : pseudo-inverse de $\mathbf{X}$ : $\mathbf{X}^\# = (\mathbf{X}^\dagger\mathbf{X})^{-1}\mathbf{X}^\dagger$
tr(X) : trace de $\mathbf{X}$
$\underset{x}{E}[.]$ : espérance mathématique
x, X : valeurs estimées
x* y : convolution des signaux x et y
$\delta(t)$ : distribution de Dirac
sinc() : fonction sinuscardinal
$\otimes$ : produit de Kronecker

**A.2. Constantes entières :**

N : nombre de capteurs composant l'antenne
M : nombre de trajets
L : longueur de la réponse impulsionnelle
K : nombre d'échantillons temporels pour composer l'observation spatio-temporelle.

**A.3. Variables scalaires :**

$x_n(.)$ : observation sur le $n^{\text{ième}}$ capteur
s() : signal émis par la source
b() : bruit
$\sigma^2$ : variance du bruit
$h_n()$ : réponse impulsionnelle du $n^{\text{ième}}$ canal
$F_e$ : fréquence d'échantillonnage
$T_e$ : période d'échantillonnage
$\alpha_m$ : amplitude du $m^{\text{ième}}$ trajet
$\phi_m$ : déphasage du $m^{\text{ième}}$ trajet
$\theta_m$ : azimut du $m^{\text{ième}}$ trajet
$\gamma_m$ : site du $m^{\text{ième}}$ trajet
$\tau_m$ : retard de groupe du $m^{\text{ième}}$ trajet
$a_n(\theta)$ : gain du $n^{\text{ième}}$ capteur dans la direction $(\theta)$
J() : critère à optimiser

**A.4. Variables vectorielles et matricielles :**

$\underline{x}$ : observation spatiale sur l'antenne, de longueur $\mathbf{N}$
$\underline{y}$ : observation spatio-temporelle sur l'antenne, de longueur $\mathbf{NK}$
$\underline{h}$ : vecteur des réponses impulsionnelles, de longueur N(L+1)

$\underline{a}(\theta)$ : vecteur directionnel spatial, de longueur **N**

$\underline{m}(\tau)$ : vecteur temporel, de longueur **L+1**

$\mathbf{I}_q$ : matrice identité de taille qxq

$\mathbf{R}_x$ : matrice de covariance du vecteur $\underline{x}$

$\mathbf{R}_y$ : matrice de covariance du vecteur $\underline{y}$

$\mathbf{R}_h$ : matrice de covariance du vecteur $\underline{h}$

**M** : matrice des **M** vecteurs temporels : **M** = $[\underline{m}(\tau_1),\cdots,\underline{m}(\tau_M)]$

**A** : matrice des **M** vecteurs directionnels : **A** = $[\underline{a}(\theta_1),\cdots,\underline{a}(\theta_M)]$

$\Omega$ : matrice des atténuations des **M** trajets

**H** : matrice des filtres mis en colonnes, de taille (L+1)$\times$**N**

G : matrice formée des réponses impulsionnelles

**ANNEXE B**

**LE MAXIMUM DE VRAISEMBLANCE DETERMINISTE**

En considérant un signal de la forme :

$$y_k = A(\theta)s_K + b_k$$

et le bruit comme étant gaussien, centré de variance $\sigma^2$, la distribution de probabilité du bruit est de la forme :

$$f(b_k) = \frac{1}{\pi^M|\sigma^2|}\exp^{-\frac{1}{\sigma^2}|bk|^2}$$

La distribution de probabilité des données qui est à maximiser est donnée par la relation :

$$f(x_k|s_k)= \frac{1}{\pi^M|\sigma^2|}\exp^{-\frac{1}{\sigma^2}|xk-Ask|^2}$$

La vraisemblance des données pour le vecteur des données concaténées est alors :

$$L\left(x_1, x_2, ..., x_k\right) = \prod_{k=1}^{K}\frac{1}{\pi^M|\sigma^2|}\exp^{-\frac{1}{\sigma^2}|x_k - As_k|^2}$$

Pour maximiser la vraisemblance cela est équivalent à minimiser la relation :

$$-\log\left(L\left(x_1, x_2, ..., x_k\right)\right) = -MK\log\sigma^2 + \sum_{k=1}^{K}|x_k - As_k|^2$$

La minimisation de ce critère par rapport à $\theta$ amène à minimiser :

$$\varepsilon_K = \sum_{k=1}^{K}|x_k - As_k|^2$$

$$\Rightarrow \hat{s}_k = \left(A^\dagger A\right)^{-1} A^\dagger x_k$$

d'où :

$$\varepsilon_K = \sum_{k=1}^{K} \left| \left( I - A\left(A^\dagger A\right)^{-1} A^\dagger \right) x_k \right|^2 = \sum_{k=1}^{K} |u_k|^2$$

comme

$$|u_k|^2 = u_k^\dagger u_k = tr(u_k^\dagger u_k) = tr(u_k u_k^\dagger)$$

$\varepsilon_k$ devient :

$$\varepsilon_k = \sum_{k=1}^{K} tr\left(x_k^\dagger \Pi_b^\dagger \Pi_b x_k\right) = tr\left(\Pi_b \hat{R}_x\right)$$

**Revendications**

1. Procédé de localisation spatio-temporelle d'un radio-mobile relativement à une station de base émettrice/réceptrice consistant :

   - à calculer (1) la réponse impulsionnelle du canal de propagation entre le radio-mobile et la station émettrice/réceptrice,
   - à estimer (2) à partir de la réponse impulsionnelle les couples d'angle et de retard du trajet de propagation direct et des multitrajets résultats de réflexions sur des obstacles situés dans le champ de propagation des ondes entre la station de base et le radio-mobile,
   - à calculer (2) pour chaque trajet les atténuations $\alpha_i$, **caractérisé en ce qu'**il consiste à calculer (3) la distance d séparant la station émettrice/réceptrice du radio-mobile en considérant seulement les retards et les atténuations du trajet direct et d'un multitrajet quelconque, et **en ce que** la distance d est déterminée par la relation :

$$d = \frac{(\tau_2 - \tau_1)c}{\dfrac{\alpha_1}{\alpha_2} \dfrac{1}{\mu} - 1}$$

   où $\tau_2 - \tau_1$ est l'écart des temps de propagation entre le trajet direct et le trajet réfléchi,
   c est la célérité des ondes transmises sur le canal de propagation,
   $\dfrac{\alpha_1}{\alpha_2}$ est le rapport des atténuations des propagations sur le trajet direct et le second trajet,
   et $\mu$ la partie due à la réflexion de l'onde sur le second trajet.

2. Procédé selon la revendication 1 **caractérisé en ce qu'**il consiste pour calculer (2) les atténuations $\alpha_1$ et $\alpha_2$ des ondes sur le trajet à calculer une matrice diagonale $\Omega$ définie par le produit matriciel :

$$\hat{\Omega} = \hat{M}^{\#} H \hat{A}^t$$

où

$$\hat{M} = \left\| \mathrm{sinc}\left[\left(i - \tau_j F_e\right) B\right] \right\|_{i=0\cdots L}^{j=1\cdots M}$$

est la matrice des coefficients de la réponse impulsionnelle de canal,

$$H = [\underline{h}_1, \underline{h}_2, \cdots, \underline{h}_N]$$

et $\hat{A}^t$ est la matrice transposée des vecteurs directionnels $\underline{a}_n$ $(\theta_n,\gamma_n)$ correspondant aux multitrajets.

3. Procédé selon l'une quelconque des revendications 1 à 2, **caractérisé en ce qu'**il consiste à déterminer la réponse impulsionnelle du canal (1) au moyen d'une antenne multi-capteurs couplé à un filtre causal, à réponse impulsionnelle finie.

4. Procédé selon l'une quelconque des revendications 1 à 3, **caractérisé en ce qu'**il consiste à effectuer une estimation des angles et des retards en estimant les paramètres temporels à partir de la connaissance des angles $\theta_m$.

5. Procédé selon l'une quelconque des revendications 1 à 3, **caractérisé en ce qu'**il consiste à effectuer une estimation des angles et des retards en estimant les paramètres spatiaux $\theta_m$ à partir des retards $\tau_m$.

6. Procédé selon l'une quelconque des revendications 1 à 3, **caractérisé en ce qu'**il consiste à effectuer une estimation conjointe des angles $\theta_m$ et des retards $\tau_m$.

7. Procédé selon l'une quelconque des revendications 1 à 6, **caractérisé en ce qu'**il consiste à estimer les paramètres temporels et les directions d'arrivée des multitrajets par la mise en oeuvre de l'algorithme connu sous le nom de « MUSIC ».

8. Procédé selon l'une quelconque des revendications 1 à 6, **caractérisé en ce qu'**il consiste à estimer les paramètres temporels et les directions d'arrivée des multitrajets par la mise en oeuvre de l'algorithme déterministe connu sous la dénomination de « maximum de vraisemblance ».

**Patentansprüche**

1. Verfahren zur räumlich-zeitlichen Lokalisation einer Funk-Mobilstation bezüglich einer Sende/Empfangs-Basisstation, das darin besteht:

- die Impulsantwort des Ausbreitungskanals zwischen der Funk-Mobilstation und der Sende-/Empfangsstation zu berechnen (1),
- ausgehend von der Impulsantwort die Winkel- und Verzögerungspaare des direkten Ausbreitungswegs und der Mehrfachwege, die Ergebnisse von Reflexionen auf Hindernissen sind, die sich im Ausbreitungsfeld der Wellen zwischen der Basisstation und der Funk-Mobilstation befinden, zu schätzen (2),
- für jeden Weg die Dämpfungen $\alpha_i$ zu berechnen (2),

**dadurch gekennzeichnet, dass** es darin besteht, die die Sende-/Empfangsstation von der Funk-Mobilstation trennende Entfernung zu berechnen (3), indem nur die Verzögerungen und die Dämpfungen des direkten Wegs und eines beliebigen Mehrfachwegs in Betracht gezogen werden, und dass die Entfernung d durch folgende Beziehung bestimmt wird:

$$d = \frac{(\tau_2 - \tau_1)c}{\sqrt{\dfrac{\alpha_1}{\alpha_2}\dfrac{1}{\mu}} - 1}$$

wobei $\tau_2 - \tau_1$ die Abweichung der Ausbreitungszeiten zwischen dem direkten Weg und dem reflektierten Weg ist, c die Geschwindigkeit der auf dem Ausbreitungskanal übertragenen Wellen ist, $\dfrac{\alpha_1}{\alpha_2}$ das Verhältnis der Dämpfungen der Ausbreitungen auf dem direkten Weg und dem zweiten Weg ist, und μ der durch die Reflexion der Welle auf dem zweiten Weg verursachte Teil ist.

**2.** Verfahren nach Anspruch 1, **dadurch gekennzeichnet, dass** es zur Berechnung (2) der Dämpfungen $\alpha_1$ und $\alpha_2$ der Wellen auf dem Weg darin besteht, eine diagonale Matrix $\Omega$ zu berechnen, die vom folgenden Matrixprodukt definiert wird:

$$\hat{\Omega} = \hat{M}^{\#} H \hat{A}^{t}$$

wobei

$$\hat{M} = \left\| \sin c\left[ (i - \tau_j F_e) B \right] \right\|_{j=0\ldots L}^{j=1\ldots M}$$

die Matrix der Koeffizienten der Impulsantwort dieses Kanals ist,

$$H = [\underline{h}_1, \underline{h}_2, \ldots \underline{h}_N]$$

und $\hat{A}^t$ die transponierte Matrix der Richtvektoren $\underline{a}_n(\theta_n, \gamma_n)$ entsprechend den Mehrfachwegen ist.

**3.** Verfahren nach einem der Ansprüche 1 und 2, **dadurch gekennzeichnet, dass** es darin besteht, die Impulsantwort des Kanals (1) mittels einer mit einem Kausalfilter mit endlicher Impulsantwort gekoppelten Multisensor-Antenne zu bestimmen.

**4.** Verfahren nach einem der Ansprüche 1 bis 3, **dadurch gekennzeichnet, dass** es darin besteht, eine Schätzung der Winkel und der Verzögerungen durchzuführen, indem die zeitlichen Parameter ausgehend von der Kenntnis der Winkel $\theta_m$ geschätzt werden.

**5.** Verfahren nach einem der Ansprüche 1 bis 3, **dadurch gekennzeichnet, dass** es darin besteht, eine Schätzung der Winkel und der Verzögerungen durchzuführen, indem die räumlichen Parameter $\theta_m$ ausgehend von den Verzögerungen $\tau_m$ geschätzt werden.

**6.** Verfahren nach einem der Ansprüche 1 bis 3, **dadurch gekennzeichnet, dass** es darin besteht, eine gemeinsame Schätzung der Winkel $\theta_m$ und der Verzögerungen $\tau_m$ durchzuführen.

**7.** Verfahren nach einem der Ansprüche 1 bis 6, **dadurch gekennzeichnet, dass** es darin besteht, die zeitlichen Parameter und die Ankunftsrichtungen der Mehrfachwege durch die Anwendung des unter der Bezeichnung "MUSIC" bekannten Algorithmus zu schätzen.

**8.** Verfahren nach einem der Ansprüche 1 bis 6, **dadurch gekennzeichnet, dass** es darin besteht, die zeitlichen Parameter und die Ankunftsrichtungen der Mehrfachwege durch die Anwendung des deterministischen Algorithmus zu schätzen, der unter der Bezeichnung "maximale Wahrscheinlichkeit" bekannt ist.

**Claims**

**1.** Method of spatio-temporal location of a mobile radio relative to a transmitting/receiving base station consisting:

- in calculating (1) the impulse response of the propagation channel between the mobile radio and the transmitting/receiving station,
- in estimating (2) from the impulse response the angle and delay pairs for the direct propagation path and for the multipaths resulting from reflections off obstacles situated in the field of propagation of the waves between the base station and the mobile radio,

- in calculating (2) for each path the attenuations $\alpha_1$, **characterized in that** it consists in calculating (3) the distance d separating the transmitting/ receiving station from the mobile radio by considering only the delays and the attenuations of the direct path and of any multipath, and **in that** the distance d is determined by the relation:

$$d = \frac{(\tau_2 - \tau_1)c}{\sqrt{\dfrac{\alpha_1}{\alpha_2}\dfrac{1}{\mu} - 1}}$$

where $\tau_2 - \tau_1$ is the difference in the propagation times between the direct path and the reflected path,
$c$ is the speed of the waves transmitted over the propagation channel,
$\dfrac{\alpha_1}{\alpha_2}$ is the ratio of the attenuations of the propagations over the direct path and the second path,
and $\mu$ the part due to the reflection of the wave on the second path.

2. Method according to Claim 1, **characterized in that** to calculate (2) the attenuations $\alpha_1$ and $\alpha_2$ of the waves over the path it consists in calculating a diagonal matrix $\Omega$ defined by the matrix product:

$$\hat{\Omega} = \hat{M}^{\#} H \hat{A}^{t}$$

where

$$\hat{M} = \left\| \sin c\left[\left(i - \tau_j F_e\right)B\right] \right\|_{i=0...L}^{j=1...M}$$

is the matrix of the coefficients of the channel impulse response,

$$H = \lfloor \underline{h}_1, \underline{h}_2, ..., \underline{h}_N \rfloor$$

and $\hat{A}^t$ is the matrix transpose of the direction vectors $\underline{a}_n(\theta_n, \gamma_n)$ corresponding to the multipaths.

3. Method according to any one of Claims 1 to 2, **characterized in that** it consists in determining the impulse response of the channel (1) by means of a multisensor antenna coupled to a causal filter, with finite impulse response.

4. Method according to any one of Claims 1 to 3, **characterized in that** it consists in performing an estimation of the angles and of the delays by estimating the temporal parameters from the knowledge of the angles $\theta_m$.

5. Method according to any one of Claims 1 to 3, **characterized in that** it consists in performing an estimation of the angles and of the delays by estimating the spatial parameters $\theta_m$ from the delays $\tau_m$.

6. Method according to any one of Claims 1 to 3, **characterized in that** it consists in performing a joint estimation of the angles $\theta_m$ and of the delays $\tau_m$.

7. Method according to any one of Claims 1 to 6, **characterized in that** it consists in estimating the temporal parameters and the directions of arrival of the multipaths by the implementation of the algorithm known by the name "MUSIC".

8. Method according to any one of Claims 1 to 6, **characterized in that** it consists in estimating the temporal parameters and the directions of arrival of the multipaths by the implementation of the deterministic algorithm known by the expression "maximum likelihood".

```
┌─────────────────────┐
│      RÉPONSE         │╲ 1
│   IMPULSIONNELLE     │
└─────────────────────┘
          │
┌─────────────────────┐
│     CALCUL DE        │╲ 2
│   θm, τm, αm         │
└─────────────────────┘
          │
┌─────────────────────┐
│    CALCUL  DE        │╲ 3
│        d             │
└─────────────────────┘
```

# FIG.1

# FIG.2

ONDE INCIDENTE

CAPTEUR 1

# FIG.3

FIG.4

FIG.5